# EUROPÄISCHE PATENTSCHRIFT

(11) **EP 1 416 774 B1**
(45) Veröffentlichungstag und Bekanntmachung des Hinweises auf die Patenterteilung: **29.11.2006**
(21) Anmeldenummer: 03103704.7
(22) Anmeldetag: 07.10.2003
(51) Int. Cl.: H05B 33/08, H05B 35/00

(54) **Ansteuerung für mindestens eine Leuchtdiode an einem Kraftfahrzeug**
Control circuit for at least one light-emitting diode in a vehicle
Circuit de contrôle pour au moins une diode électroluminescente dans un véhicule

(30) Priorität: 12.10.2002 DE 10247677
(43) Veröffentlichungstag der Anmeldung: 06.05.2004
(73) Patentinhaber: Hella KGaA Hueck & Co., 59552 Lippstadt (DE)
(72) Erfinder: Müller, Bernd, 79650, Schopfheim (DE); Studniorz, Josef, 59329, Wadersloh (DE); Sobischek, Björn, 79410, Badenweiler (DE); Schultz, Aloys, 79683, Bürchau (DE)

(56) Entgegenhaltungen:
- EP-A- 0 891 120
- CH-A- 680 321
- DE-A- 19 618 430
- US-A- 5 998 928

## Beschreibung

Die Erfindung bezieht sich auf eine Ansteuerung für mindestens eine Leuchtdiode an einem Kraftfahrzeug, wobei die mindestens eine Leuchtdiode in Reihe mit mindestens einem Widerstand geschaltet ist. Widerstände zur Strombegrenzung für Leuchtdioden an Kraftfahrzeugen sind dem Fachmann seit langem geläufig - siehe zum Beispiel DE 196 18 010 C1). Normale Widerstände haben jedoch den Nachteil, daß der Strom bei Schwankungen der Versorgungsspannung (Bordnetzspannung) mitschwankt, insbesondere bieten normale Widerstände keine Schutz gegen Überspannungen. Aus diesem Grunde wird in der EP 0 891 120 A2 vorgeschlagen, PTC-Widerstände zu verwenden. PTC-Widerstände sind jedoch im Vergleich zu normalen Widerständen sehr teuer.

Aus der DE 196 18 430 A1 ist es bekannt, eine Glühlampe als Strombegrenzungswiderstand für die Leuchtdiode zu verwenden. Eine Glühlampe hat ähnliche Eigenschaften wie ein PTC-Widerstand, d.h. eine Glühlampe bewirkt bei Überspannungen eine Strombegrenzung, da sich die Glühwendel einer Glühlampe bei Überspannung stark erwärmt, wobei der Widerstandswert der Glühlampe schnell ansteigt, wodurch letztendlich eine effektive Strombegrenzung bewirkt wird. Im Vergleich zu den PTC-Widerständen, die zur Strombegrenzung bei Hochleistungs-LEDs (z.B. Luxeon^{™} der Fa. LumiLed) in Frage kommen, sind Glühlampen jedoch preisgünstiger. Darüber hinaus hat die Verwendung einer Glühlampe als Widerstand den Vorteil, daß die Abfuhr der Verlustwärme im Vergleich zu einem normalen Widerstand oder auch zu einem PTC-Widerstand nicht problematisch ist, da die Glühwendel in der Glühlampe ohnehin thermisch isoliert gegenüber dem Bauraum, in dem sich die Glühlampe befindet, angeordnet ist und die Glühlampe an sich auch bei vergleichsweise extremen Temperaturen zuverlässig arbeitet. Aufwendige Maßnahmen zur Wärmeabfuhr, wie z.B. ein Kühlkörper für einen PTC-Widerstand, können entfallen.

Die Verwendung einer Glühlampe als Strombegrenzungswiderstand für eine Leuchtdiode ist für den Fachmann insofern verblüffend, da insbesondere im Kraftfahrzeugbereich Leuchtdioden anstatt von Glühlampen hauptsächlich deshalb eingesetzt werden, weil Leuchtdioden eine höhere Lebensdauer als Glühlampen haben. Somit wird der Vorteil, der mit dem Einsatz von Leuchtdioden erreicht werden soll, auf den ersten Blick durch die Verwendung einer Glühlampe zur Ansteuerung konterkariert, da die Funktionsfähigkeit der Leuchtdiode an die vermeintlich kurze Lebensdauer der Glühlampe gekoppelt ist.

Dabei wird der Umstand ausgenützt, daß die Lebensdauer einer Glühlampe höher ist, wenn der Spannungsabfall an der Glühlampe auch nur geringfügig unterhalb der Nennspannung liegt, die für die eigentliche Verwendung der Glühlampe als Lichtquelle spezifiziert ist. Genau diese Bedingung liegt jedoch vor, wenn in einem Kraftfahrzeug, dessen Bordnetzspannung gleich oder geringer ist als die Nennspannung der Glühlampe, diese Glühlampe in Reihe zu einer Leuchtdiode geschaltet wird, da der Spannungsabfall über der Glühlampe um die Fluß-/Durchlaßspannung der Leuchtdiode reduziert wird. So bewirkt bereits eine Reduzierung der Spannung an der Glühlampe um 5% gegenüber der Nennspannung eine Verdopplung der Lebensdauer.

Um den Strom durch die Leuchtdiode für verschiedene Leuchtdioden und Lichtströme einstellen zu können, ist es vorgesehen, je nach Anforderung Glühlampen mit unterschiedlich spezifizierten Leistungen einzusetzen. Falls der Wert des Glühlampenwiderstands zur Strombegrenzung allein nicht ausreicht, so ist es vorgesehen, zusätzlich zur Glühlampe mindestens einen weiteren "normalen" Widerstand, quasi als Offset, in Reihe zu schalten. Falls der Wert des Glühlampenwiderstands den Strom zu sehr begrenzt, so ist es vorgesehen, parallel zur Glühlampe mindestens einen weiteren "normalen" Widerstand zu schalten.

Bei Verwendung einer ohnehin am Fahrzeug vorhandene Glühlampe entfallen Bauteilekosten sowie Bestückungskosten.

Aufgabe der Erfindung ist es, eine Ansteuerung zu schaffen, die es einerseits gestattet, eine Glühlampe als Strombegrenzungswiderstand für eine LED zu verwenden und andererseits die Verwendung dieser Glühlampe nur als Lichtquelle ermöglicht.

Diese Aufgabe wird durch die Merkmale des Anspruchs 1 gelöst.

Anhand der beigefügten Zeichnungen soll die Erfindung nachfolgend näher beschrieben werden. Es zeigt:
- Figur 1: den Verlauf der Glühlampen-Lebensdauer in Abhängigkeit von der Spannung,
- Figur 2: eine erfindungsgemäße Ansteuerschaltung,
- Figur 3: eine erfindungsgemäße Ansteuerschaltung, wobei die Schaltmittel zum Ein- und Ausschalten der Leuchtdiode und der Glühlampe jeweils Teil einer Ansteuerelektronik sind.

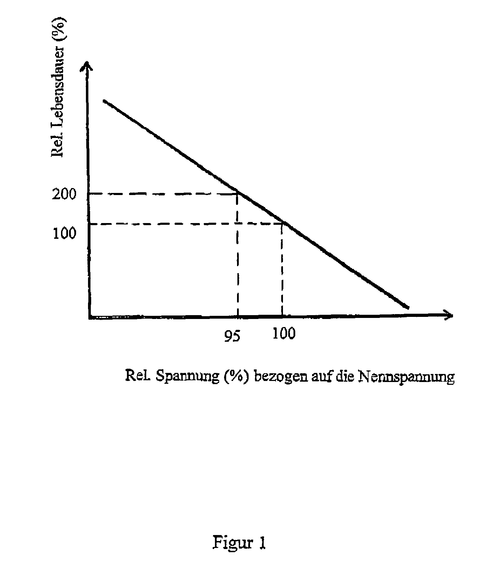

In Figur 1 ist der Verlauf der relativen Glühlampen-Lebensdauer in Abhängigkeit von der relativen Spannung bezogen auf die Nennspannung dargestellt. Wie man erkennt, bewirkt bereits ein Betriebsspannung, die nur 5 % unterhalb der Nennspannung liegt, eine Verdopplung der Lebensdauer, so daß die Lebensdauer der Leuchtdioden-Ansteuerung doch nicht in unvertretbarer Weise durch die Glühlampe verkürzt wird. Beispielsweise fallen bei Verwendung einer Leuchtdiode mit einer Flußspannung von 2 Volt in einem 12 Volt Bordnetz über der Glühlampe nur noch 10 Volt ab. Bei Verwendung einer 12 Volt Glühlampe bedeutet dies, daß der Spannungsabfall über der Glühlampe, wenn sie als Strombegrenzungswiderstand für eine Leuchtdiode betrieben wird, ca. 17 % unterhalb der Nennspannung liegt. Damit verbunden ist eine enorme Steigerung der Lebensdauer.

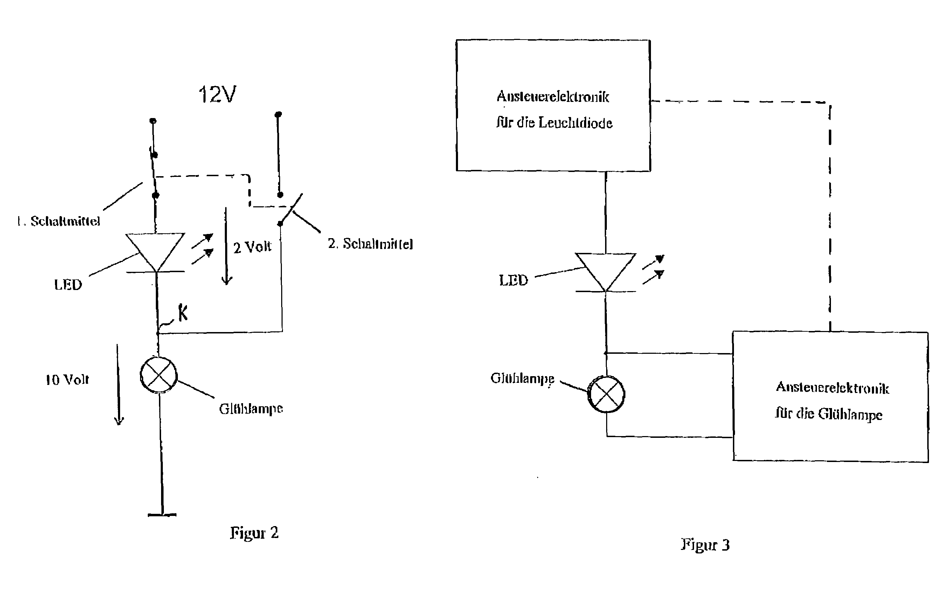

In Figur 2 ist eine erfindungsgemäße Ansteuerschaltung gezeigt, bei der in Reihe zur Leuchtdiode (LED) eine Glühlampe als Strombegrenzungswiderstand geschaltet ist. Dabei wird die Glühlampe vorzugsweise an sich als Lichtquelle (erste Verwendung) am Fahrzeug verwendet. Als Strombegrenzungswiderstand (zweite Verwendung) wird die Glühlampe nur im an sich ausgeschalteten Zustand verwendet. Der "an sich" ausgeschaltete Zustand bezeichnet den Zustand, wo die Verwendung der Glühlampe als Lichtquelle ausgeschaltet ist, und zwar auch dann, wenn der Strom, der in diesem Zustand durch die Reihenschaltung aus Leuchtdiode und Glühlampe fließt, ein schwaches Glimmen der Glühlampe verursachen sollte.

Die Tatsache, daß in den Figuren nur eine Leuchtdiode dargestellt ist, bedeutet nicht, daß die Erfindung auf die Verwendung von nur einer Leuchtdiode, z.B. einer Hochleistungs-LED, beschränkt ist. Vielmehr steht diese mindestens eine Leuchtdiode auch stellvertretend für eine Parallel- und/oder Reihenschaltung aus zwei oder mehr Leuchtdioden, die dann in Reihe zur Glühlampe geschaltet wird.

Zur Realisierung der erfindungsgemäßen Ansteuerung kann beispielsweise auf die Glühlampe einer Türwarnleuchte zurückgegriffen werden, die als Lichtquelle eingeschaltet wird, sobald die zugehörige Fahrzeugtür geöffnet wird, wodurch andere Verkehrsteilnehmer, insbesondere im Dunkeln vor der eine potentielle Gefährdung darstellenden offenstehenden Fahrzeugtür gewarnt werden. Alternativ dazu kann beispielsweise auch auf eine Glühlampe der Fahrzeuginnenraumbeleuchtung zurückgegriffen werden.

Die in Frage stehende Leuchtdiode kann beispielsweise als Fahrzeugtür-Vorfeldbeleuchtung verwendet werden, die dem Fahrer, insbesondere im Dunkeln eine bessere Sicht und Orientierung beim Einsteigen ins Fahrzeug vor dem Öffnen einer Fahrzeugtür bietet.

Zum Ein- und Ausschalten der Leuchtdiode ist ein erstes Schaltmittel und zum Ein-und Ausschalten der Glühlampe als Lichtquelle ist ein zweites Schaltmittel vorgesehen ist, wobei die mindestens eine Leuchtdiode über das erste Schaltmittel nur dann eingeschaltet ist, wenn die Glühlampe als Lichtquelle über das zweite Schaltmittel ausgeschaltet ist.

Das erste Schaltmittel zum Ein- und Ausschalten der Leuchtdiode kann - im Falle der Fahrzeugtür-Vorfeldbeleuchtung - beispielsweise über einen an der Fahrzeugtür angeordneten Näherungsschalter betätigbar sein, der bei Annäherung des Fahrers an die Fahrzeugtür ein Schaltsignal erzeugt. Alternativ dazu kann das erste Schaltmittel auch über eine Funkfernbedienung für die Zentralverriegelung betätigbar sein, so daß mit dem Entriegelungssignal gleichzeitig auch ein Schaltsignal zum Einschalten der Leuchtdiode erzeugt wird. Das zweite Schaltmittel zum Ein- und Ausschalten der Glühlampe ist - im Falle der Türwarnleuchte - vorzugsweise ein Türkontaktschalter, wobei der Türkontaktschalter bei geschlossener Tür die Glühlampe ausschaltet und bei geöffneter Tür einschaltet. Das Einschalten der Leuchtdiode erfolgt nur dann, wenn die Fahrzeugtür geschlossen ist. In diesem Zustand ist die Glühlampe als Lichtquelle der Türwarnleuchte über den Türkontaktschalter ausgeschaltet.

Die Reihenschaltung aus Leuchtdiode und Glühlampe ist zwischen Versorgungsspannungspotential (Bordnetzspannung) und Masse geschaltet, wobei die Leuchtdiode versorgungsspannungsseitig und die Glühlampe masseseitig angeordnet ist. Dabei ist die Leitung zwischen Leuchtdiode und Glühlampe in einem Knotenpunkt (K) über das zweite Schaltmittel mit dem Versorgungsspannungspotential verbindbar, und zwar legt das zweite Schaltmittel den Knotenpunkt auf Versorgungsspannungspotential, wenn die Glühlampe über das zweite Schaltmittel als Lichtquelle eingeschaltet wird. In diesem Zustand fließt über die Leuchtdiode kein Strom, da das dem Knotenpunkt abgewandte Leitungsende der Leuchtdiode über das erste Schaltmittel von der Versorgungsspannung abgetrennt ist. Selbst dann, wenn dieses Leitungsende noch mit der Versorgungsspannung verbunden wäre, würde über die Leuchtdiode aufgrund der fehlenden Spannungsdifferenz kein Strom fließen.
Wenn die Leuchtdiode über das erste Schaltmittel als Fahrzeugtür-Vorfeldbeleuchtung eingeschaltet wird, ist die Verbindung über das zweite Schaltmittel zwischen dem Knotenpunkt (K) und der Versorgungsspannung getrennt. In diesem Fall fließt der Leuchtdiodenstrom durch die Reihenschaltung aus Leuchtdiode und Glühlampe. Die Spannung, die sich in diesem Fall im Knotenpunkt (K) einstellt, wird durch den Innenwiderstand der Leuchtdiode und den Widerstand der Glühlampe bestimmt.

Im Falle der Türwarnleuchte und der Tür-Vorfeldbeleuchtung sind die Schaltzustände der beiden Schaltmittel bereits durch die jeweilige Anwendung in Bezug zueinander eindeutig definiert, so daß auch ohne eine Verbindung oder eine zusätzliche Schaltlogik immer sicher gestellt ist, daß die Glühlampe als Lichtquelle immer ausgeschaltet ist, wenn sie als Strombegrenzungswiderstand für die Leuchtdiode verwendet werden soll. Falls das durch die Anwendung nicht per se sichergestellt ist, so ist eine Verbindung oder eine Schaltlogik zwischen den beiden Schaltmitteln vorgesehen, die genau dies leistet.

In Figur 3 ist eine Ansteuerung gezeigt, bei der die Schaltmittel Teil einer komplexeren Ansteuerelektronik sind.

## Patentansprüche

1. Ansteuerschaltung für mindestens eine Leuchtdiode an einem Kraftfahrzeug, wobei
- die mindestens eine Leuchtdiode in Reihe mit mindestens einem Widerstand geschaltet ist,
- der Widerstand von mindestens einer Glühlampe gebildet wird,
**dadurch gekennzeichnet, dass**
zum Ein- und Ausschalten der Leuchtdiode ein erstes Schaltmittel vorgesehen ist und zum Ein- und Ausschalten der Glühlampe als Lichtquelle ein zweites Schaltmittel vorgesehen ist, wobei die mindestens eine Leuchtdiode über das erste Schaltmittel nur dann eingeschaltet ist, wenn die Glühlampe als Lichtquelle über das zweite Schaltmittel ausgeschaltet ist.

2. Ansteuerschaltung nach Anspruch 1,
**dadurch gekennzeichnet, dass**
die Reihenschaltung aus Leuchtdiode und Glühlampe zwischen dem positiven Versorgungsspannungspotential (Bordnetzspannung, U-Plus) und einem negativen Spannungspotential (Masse, U-Minus) geschaltet ist, wobei die Leuchtdiode versorgungsspannungsseitig und die Glühlampe masseseitig angeordnet ist, wobei zwischen der Leuchtdiode und der Glühlampe ein Knotenpunkt über das zweite Schaltmittel mit dem Versorgungsspannungspotential verbunden ist, wenn die Glühlampe über das zweite Schaltmittel als Lichtquelle eingeschaltet ist.

3. Ansteuerschaltung nach Anspruch 1 oder 2,
**dadurch gekennzeichnet, dass**
die Glühlampe als Widerstand zu einer Parallel- und/oder Reihenschaltung aus zwei oder mehr Leuchtdioden in Reihe geschaltet ist.

4. Ansteuerschaltung nach einem der vorstehenden Ansprüche,
**dadurch gekennzeichnet, dass**
die Glühlampe als Lichtquelle für eine Türwarnieuchte zur Warnung bei einer geöffneten Fahrzeugtür oder als Fahrzeuginnenraumleuchte verwendet wird, wobei ein Türkontaktschalter das zweite Schaltmittel darstellt.

5. Ansteuerschaltung nach einem der vorstehenden Ansprüche,
**dadurch gekennzeichnet, dass**
die mindestens eine Leuchtediode zur Fahrzeugtür-Vorfeldbeleuchtung verwendet wird, wobei das erste Schaltmittel zum Ein- und Ausschalten der mindestens einen Leuchtdiode über einen Näherungsschalter oder über eine Funkfernbedienung für die Zentralverriegelung betätigbar ist.

6. Ansteuerschaltung nach einem der vorstehenden Ansprüche,
**dadurch gekennzeichnet, dass**
zusätzlich zur Glühlampe mindestens ein weiterer Widerstand in Reihe mit der Leuchtdiode geschaltet ist.

7. Ansteuerschaltung nach einem der vorstehenden Ansprüche,
**dadurch gekennzeichnet, dass**
parallel zur Glühlampe mindestens ein Widerstand geschaltet ist.

## Claims

1. Control circuit for at least one light-emitting diode in a vehicle, in which
- at least one light-emitting diode is connected in series with at least one resistor,
- the resistor is constituted by at least one incandescent lamp,
**characterised in that**
a first switching means is provided for switching the light-emitting diode on and off and a second switching means is provided for switching the incandescent lamp as light source on and off, in which at least one light emitting diode is only switched on via the first switching means if the incandescent lamp as light source is switched off via the second switching means.

2. Control circuit according to claim 1,
**characterised in that**
the series circuit consisting of a light-emitting diode and incandescent lamp is switched between the positive supply voltage potential (vehicle electrical system voltage, positive voltage) and a negative voltage potential (earth, negative voltage), in which the light-emitting diode is arranged on the supply voltage side and the incandescent lamp is arranged on the earth side, in which between the light-emitting diode and the incandescent lamp a node is connected to the supply voltage potential via the second switching means, if the incandescent lamp as light source is switched on via the second switching means.

3. Control circuit according to claim 1 or 2,
**characterised in that**
the incandescent lamp is connected in series as a resistor to a parallel and / or a series circuit consisting of two or more light-emitting diodes.

4. Control circuit according to one of the foregoing claims,
**characterised in that**
the incandescent lamp as light source is used as a door open warning light to warn of an opened vehicle door or as a vehicle interior light, in which a door contact switch constitutes the second switching means.

5. Control circuit according to one of the foregoing claims,
**characterised in that**
at least one light-emitting diode is used to light the area in front of the vehicle door, in which the first switching means can be actuated to switch at least one light-emitting diode on and off via a proximity switch or via a radio remote control for the central locking system.

6. Control circuit according to one of the foregoing claims,
**characterised in that**
in addition to the incandescent lamp at least one further resistor is connected in series with the light-emitting diode.

7. Control circuit according to one of the foregoing claims,
**characterised in that**
at least one resistor is connected in parallel with the incandescent lamp.

## Revendications

1. Circuit de contrôle pour au moins une diode électroluminescente dans un véhicule, dans lequel
- la au moins une diode électroluminescente est reliée en série à au moins une résistance,
- la résistance est constituée d'au moins une lampe à incandescence,
**caractérisé en ce que**
pour allumer et éteindre la diode électroluminescente est prévu un premier moyen de commutation et pour allumer et éteindre la lampe à incandescence en tant que source lumineuse est prévu un second moyen de commutation, où la au moins une diode électroluminescente n'est allumée que par l'intermédiaire du premier moyen de commutation que lorsque la lampe à incandescence en tant que source lumineuse est coupée par l'intermédiaire du second moyen de commutation.

2. Circuit de contrôle selon la revendication 1, **caractérisé en ce que** la connexion en série constituée de la diode électroluminescente et de la lampe à incandescence est reliée entre le potentiel de tension d'alimentation positif (tension du réseau embarqué, borne Plus) et un potentiel de tension négatif (masse, borne Moins), où la diode électroluminescente est disposée côté tension d'alimentation et la lame côté masse, où entre la diode électroluminescente et la lampe à incandescence est connecté un point de jonction au potentiel de tension d'alimentation par l'intermédiaire du second moyen de commutation, lorsque la lampe à incandescence est allumée comme source lumineuse par l'intermédiaire du second moyen de commutation.

3. Circuit de contrôle selon la revendication 1 ou 2, **caractérisé en ce que** la lampe à incandescence est reliée en série en tant que résistance à un circuit parallèle et/ou série constitué par deux ou plusieurs diodes électroluminescentes.

4. Circuit de contrôle selon l'une des revendications précédentes, **caractérisé en ce que** la lampe à incandescence est utilisée comme source lumineuse pour un témoin lumineux de porte afin d'avertir qu'une porte du véhicule est ouverte ou en tant que plafonnier central du véhicule, où le moyen de commutation de contact de porte représente le second moyen de commutation.

5. Circuit de contrôle selon l'une des revendications précédentes, **caractérisé en ce que** la au moins une diode électroluminescente est utilisée comme éclairage de seuil de porte de véhicule, où le premier moyen de commutation peut être actionné pour allumer ou éteindre la au moins une diode électroluminescente par l'intermédiaire d'un détecteur de proximité ou par l'intermédiaire d'une télécommande radio pour le verrouillage centralisé.

6. Circuit de contrôle selon l'une des revendications précédentes, **caractérisé en ce que**, en plus de la lampe à incandescence, au moins une autre résistance est reliée en série avec la diode électroluminescente.

7. Circuit de contrôle selon l'une des revendications précédentes, **caractérisé en ce qu'**au moins une résistance est reliée parallèlement à la lampe à incandescence.
